# EUROPÄISCHE PATENTSCHRIFT

(11) **EP 3 034 369 B1**
(45) Veröffentlichungstag und Bekanntmachung des Hinweises auf die Patenterteilung: **22.06.2022**
(21) Anmeldenummer: 15197940.8
(22) Anmeldetag: 04.12.2015
(51) Int. Cl.: B60T 13/22, F16D 59/02

(54) **MOBILE ARBEITSMASCHINE MIT EINER BREMSEINRICHTUNG**
MOBILE WORKING MACHINE WITH A BRAKING DEVICE
MACHINE DE TRAVAIL MOBILE DOTEE D'UN DISPOSITIF DE FREINAGE

(30) Priorität: 15.12.2014 DE 102014118644
(43) Veröffentlichungstag der Anmeldung: 22.06.2016
(73) Patentinhaber: Linde Material Handling GmbH, 63743 Aschaffenburg (DE)
(72) Erfinder: Knechtel, Hans-Ulrich, 63785 Obernburg (DE); Meth, Henning, 63150 Heusenstamm (DE); Hanke, Mark, 63739 Aschaffenburg (DE)
(74) Vertreter: Patentship Patentanwaltgesellschaft

(56) Entgegenhaltungen:
- DE-A1- 19 903 564
- DE-A1-102007 037 967
- DE-A1-102008 012 708
- DE-A1-102009 005 009
- DE-A1-102009 031 743

## Beschreibung

Die Erfindung betrifft eine mobile Arbeitsmaschine, insbesondere Flurförderzeug, mit einer Bremseinrichtung, die als hydraulisch lösbare Federspeicherbremse und als zweikreisige Betriebsbremse, mittels der ein Fahrer die fahrende Arbeitsmaschine dosiert abbremsen kann, ausgebildet ist, wobei die Federspeicherbremse mittels eines in einem Bremslösedruckraum anstehenden hydraulischen Bremslösedrucks in Richtung einer Lösestellung beaufschlagbar ist und mittels eines in einem Bremsdruckraum anstehenden hydraulischen Bremsdruckes in Richtung einer Bremsstellung beaufschlagbar ist.

Bei mobilen Arbeitsmaschinen, beispielsweise als Gabelstaplern ausgebildeten Flurförderzeugen, werden hydraulisch lösbare Federspeicherbremsen als Bremseinrichtungen eingesetzt.

Derartige als Federspeicherbremsen ausgebildete Bremseinrichtungen, die durch einen Bremslösedruck in einem Bremslösedruckraum entgegen der Federkraft einer Federeinrichtung in die Lösestellung beaufschlagbar und somit lüftbar sind, werden auch als hydraulisch beaufschlagte negative Federspeicherbremsen bezeichnet. Die Beaufschlagung der Federspeicherbremse in Richtung der Bremsstellung erfolgt durch einen Abbau des in dem Bremslösedruckraum anstehenden und von einem Bremsventil gesteuerten Bremslösedruckes, wobei die maximale Bremskraft und somit das maximale Bremsmoment durch die Federkraft der Federeinrichtung der Federspeicherbremse vorgegeben wird. Derartige Federspeicherbremsen, die lediglich durch Veränderung des in dem Bremslösedruckraum anstehenden Bremslösedrucks durch entsprechende Betätigung eines den Bremslösedruck steuerbaren Bremsventils zwischen der Lösestellung und der Bremsstellung betätigbar sind, werden auch als einkreisige Federspeicherbremsen bezeichnet.

Eine alternative bekannte Ausführungsform von Bremseinrichtungen wird mechanisch und manuell, z.B. über einen Seilzug betätigt. In diesem Fall besteht keine Federvorspannung und die Bremseinrichtung muss aktiv in die Bremsstellung betätigt werden. Im unbetätigten Zustand befindet sich somit eine über einen Seilzug betätigte Bremseinrichtung in der Lösestellung, so dass die Arbeitsmaschine rollen kann. Ein bekannter Nachteil von über einen Seilzug betätigten Bremsen ist deren Neigung zum Längen. Durch diese Dehnung des Seilzugs treten starke Toleranzen auf, wodurch es auftreten kann, dass der Fahrer bei der Betätigung eines mit dem Seilzug in Wirkverbindung stehenden Bremspedals zuerst ein zu geringes Bremsmoment aufbaut und mit der folgenden Reaktion der Arbeitsmaschine durch weitere Betätigung des Bremspedals die Arbeitsmaschine überbremst. Zudem ergibt sich hierdurch ein hoher Wartungsaufwand, um den Seilzug bei einem Längen entsprechend nachzustellen.

Eine Ausführungsform einer Federspeicherbremse ist eine Lamellenbremse, bei der ein Paket aus mehreren scheibenartigen Lamellen jeweils abwechselnd eine feststehende Lamelle und eine sich drehende Lamelle aufweist. Beim Bremsen wird dieses Paket über feststehende Lamellen an den Enden zusammengepresst und über die gesamte reibende Fläche eine mit den sich drehenden Lamellen verbundene Welle abgebremst. Eine Ausführungsform solcher Lamellenbremsen ist nasslaufend und dadurch wartungsfrei. Weitere Ausführungsformen der Bremseinrichtung, die bei älteren mobilen Arbeitsmaschinen eingesetzt wurden, sind beispielsweise Außenbacken-, Trommel- oder trocken laufende Vollscheibenbremsen.

Derartige als einkreisige Federspeicherbremsen ausgebildete Bremseinrichtungen werden als Betriebsbremse und/oder Feststellbremse verwendet. Für die Betriebsbremse, mit der ein Abbremsen der fahrenden Arbeitsmaschine erfolgt, ist es erforderlich, dass die Federspeicherbremse abhängig von der Betätigung durch den Fahrer dosiert einsetzbar ist. Hierzu steht das Bremsventil mechanisch mit einem von der Bedienperson zu betätigenden Bedienelement, beispielsweise einem Bremspedal, in Verbindung, bei dessen Betätigung das Bremsventil mechanisch betätigt wird und dosiert betätigt werden kann, wodurch der im Bremslösedruckraum der Federspeicherbremse anstehenden Bremslösedruck dosiert und steuerbar abgebaut und somit die Federspeicherbremse als Betriebsbremse dosiert in die Bremsstellung betätigt werden kann.

Nachteilig an derartigen als Betriebsbremsen eingesetzten hydraulisch lösbaren Federspeicherbremsen ist, dass - insbesondere bei federvorgespannten Lamellenbremsen - der Fahrer keine Rückmeldung an dem Bremspedal erhält, ab welchem Zeitpunkt die Bremse, etwa die Lamellen bei einer Lamellenbremse, anliegen, und somit keine Rückmeldung an dem Bremspedal über den Bremsbeginn erhält, da die Bremseinrichtung eine Fremdkraftbremse darstellt und durch den Fahrer über die Betätigung des Bremsventils nur der Druckabbau des Bremslösedruckes gesteuert wird. Der eigentliche Bremsdruck wird durch die Federkraft der Federeinrichtung der Federspeicherbremse erzeugt und führt nicht bei dem Fahrer zu einer Kraftrückmeldung bei Betätigung des Bremspedals. Durch die fehlende Rückmeldung an dem Bremspedal kann es zu einem Überbremsen der Arbeitsmaschine kommen. Bei einem Flurförderzeug kann ein Überbremsen zu einem Lastabwurf führen, wenn beispielsweise ein Gabelstapler als Flurförderzeug mit einer aufgenommenen Last so stark abgebremst wird, dass die Last von dem Lastaufnahmemittel, beispielsweise Lastgabeln, abgleitet.

Eine Feststellbremse ist durch den Abbau des Bremslösedruckes in dem Bremslösedruckraum zu einem Behälter erzielbar, so dass die Federspeicherbremse durch die Federeinrichtung in die Bremsstellung betätigt wird.

Aus der DE 199 03 564 A1 ist eine als hydraulisch lösbare Federspeicherbremse ausgebildete Bremseinrichtung einer mobilen Arbeitsmaschine bekannt, die zwei Druckräume aufweist und die Funktion einer Feststellbremse und einer Betriebsbremse aufweist.

Aus der DE 10 2008 012 708 A1, der DE 10 2007 039 967 A1 und der DE 10 2009 005 009 A1 sind mobile Arbeitsmaschinen mit einer als hydraulisch lösbaren Federspeicherbremse bekannt, die die Funktion einer Feststellbremse und einer einkreisigen Betriebsbremse aufweisen.

Für einen möglichen Betrieb der Arbeitsmaschine im öffentlichen Straßenverkehr ist entsprechend den Zulassungsvorschriften ein zweikreisiges Bremssystem der Betriebsbremse erforderlich, so dass bei Ausfall des ersten Bremskreises der zweite Bremskreis hiervon unabhängig noch funktioniert, oder alternativ ein einkreisiges Bremssystem erforderlich, das zwei voneinander unabhängig betätigbare und dosierbare Betätigungselemente aufweist.

Hierzu ist es bekannt, die Federspeicherbremse zweikreisig auszuführen, wobei zusätzlich zu der Betriebsbremse durch die Betätigung des den Bremslösedruck steuernden Bremsventils eine Hilfsbremsfunktion vorgesehen ist, um bei einem Ausfall oder Defekt des Bremsventils über die Hilfsbremsfunktion die Arbeitsmaschine kontrolliert abbremsen zu können. Bei derartigen zweikreisigen Federspeicherbremsen ist es bekannt, an der Federspeicherbremse zusätzlich zu dem der Federeinrichtung entgegenwirkenden Bremslösedruckraum einen gleichsinnig mit der Federeinrichtung wirkenden Bremsdruckraum vorzusehen, wobei ein in dem Bremsdruckraum anstehender Bremsdruck von einem weiteren Bremsventil erzeugt wird, das von einem Bedienelement, beispielsweise dem Bremspedal, mechanisch betätigt wird. Das dem Bremsdruckraum zugeordnete Bremsventil erzeugt mit zunehmender Betätigung des Bremspedals einen in dem Bremsdruckraum ansteigenden Bremsdruck, der dem Bremslösedruck entgegenwirkt und somit die Federspeicherbremse in die Bremsstellung betätigt. Dadurch dass die beiden Bremsventile auf unterschiedliche Druckkammern der Federspeicherbremse wirken, wird somit die Zweikreisigkeit und die Hilfsbremsfunktion für die Betriebsbremse erzielt, so dass bei dem Ausfall oder Defekt eines Bremsventils jeweils über das andere Bremsventils die Arbeitsmaschine dosiert abgebremst werden kann. Das weitere Bremsventil bildet jedoch ebenfalls eine Fremdkraftbremse, bei der von dem Fahrer über die Betätigung des weiteren Bremsventils nur der Druckaufbau des Bremsdruckes gesteuert wird, so dass derartige zweikreisige Betriebsbremsen keine Kraftrückmeldung an dem Bremspedal aufweisen. Zudem weisen derartige als zweikreisige Betriebsbremse arbeitende Federspeicherbremsen aufgrund der beiden Bremsventile einen hohen Bauaufwand und hohe Herstellkosten auf.

Eine Federspeicherbremse, die als zweikreisige Betriebsbremse arbeitet und zwei mittels eines Bremspedals steuerbare Bremsventile zur Steuerung des Bremslösedruckes in dem Bremslösedruckraums sowie des Bremsdruckes in einem entgegenwirkenden Bremsdruckraum aufweist, ist aus der DE 10 2009 031 743 A1 bekannt.

Der vorliegenden Erfindung liegt die Aufgabe zugrunde, eine Bremseinrichtung der eingangs genannten Gattung zur Verfügung zu stellen, die bei geringem Bauaufwand eine zweikreisige Betriebsbremse ermöglicht und dem Fahrer eine Kraftrückmeldung im Betrieb als Betriebsbremse bietet.

Diese Aufgabe wird erfindungsgemäß dadurch gelöst, dass ein erster Bremskreis der Betriebsbremse von einer Muskelkraftbremse gebildet ist, die einen manuell betätigbaren Bremszylinder aufweist, mittels dem bei einer manuellen Betätigung der in dem Bremsdruckraum anstehende Bremsduck erzeugbar ist, und ein zweiter Bremskreis der Betriebsbremse von einer Fremdkraftbremse gebildet ist, die ein Druckregelventil aufweist, mittels dem der in dem Bremslösedruckraum anstehende Bremslösedruck dosiert verringerbar ist, wobei das Druckregelventil als Proportional-Druckregelventil ausgebildet ist, wobei das Druckregelventil an eine Druckversorgungsleitung einer Druckversorgungseinrichtung, an eine zu dem Bremslösedruckraum der Federspeicherbremse geführte Bremslösedruckleitung und an einen Behälter angeschlossen ist und wobei das Druckregelventil durch eine Betätigungseinrichtung in Richtung einer die Bremslösedruckleitung mit dem Behälter verbindende Bremsstellung beaufschlagt ist und mittels einer Steuerleitung, die mit der Bremslösedruckleitung in Verbindung steht, von dem in der Bremslösedruckleitung anstehenden Bremslösedruck entgegen der Betätigungseinrichtung in Richtung einer die Bremslösedruckleitung mit der Druckversorgungsleitung verbindenden Lösestellung beaufschlagt ist.

Die erfindungsgemäße, als Federspeicherbremse ausgebildete Bremseinrichtung ermöglicht somit eine zweikreisige Betriebsbremse, wobei der erste, als Muskelkraftbremse ausgebildete Bremskreis der Betriebsbremse eine Kraftrückmeldung an den Fahrer ermöglicht. Durch die Ausführung des ersten Bremskreises als Muskelkraftbremse weist die erfindungsgemäße Bremseinrichtung weiterhin einen geringen Bauaufwand auf, da eine Muskelkraftbremse einen einfachen und kostengünstigen Aufbau ohne aufwändiges Bremsventil erfordert. Sofern im Normalfall mit dem ersten Bremskreis abgebremst wird und der zweite Bremskreis die Hilfsbremse der Betriebsbremse darstellt, wird somit bei geringem Bauaufwand bei einer hydraulisch lösbaren Federspeicherbremse eine zweikreisige Betriebsbremse zur Verfügung gestellt, die über die Ausführung des ersten Bremskreises als Muskelkraftbremse dem Fahrer eine Kraftrückmeldung im Betrieb als Betriebsbremse bietet.

Gemäß einer Ausführungsform der Erfindung ist der Bremszylinder des ersten Bremskreises von einem Bremspedal betätigt und steht mittels einer Bremsdruckleitung mit dem Bremsdruckraum der Federspeicherbremse in Verbindung, wobei der erste Bremskreis einen Ausgleichsbehälter aufweist. Mit einem von einem Bremspedal betätigten Bremszylinder, der mittels einer Bremsdruckleitung mit dem Bremsdruckraum der Federspeicherbremse in Verbindung steht, kann mit geringem Bauaufwand eine Muskelkraftbremse zur Verfügung gestellt werden. Der Ausgleichsbehälter ermöglicht es auf einfache Weise, dass beim Abbremsen mittels des zweiten Bremskreises Druckmittel aus dem Ausgleichsbehälter in den Bremsdruckraum strömen bzw. zum Lösen der Federspeicherbremse Druckmittel aus dem Bremsdruckraum in den Ausgleichsbehälter strömen kann.

Besondere Vorteile ergeben sich, wenn gemäß einer Ausführungsform der Erfindung das Druckregelventil als Proportional-Druckregelventil mit einer fallenden Ventilkennlinie ausgebildet ist. Ein derartiges Proportional-Druckregelventil ermöglicht mit einem geringen Zusatzaufwand die Hilfsbremsfunktion der Betriebsbremse. Hierbei kann ein Proportional-Druckregelventil mit einer fallenden Ventilkennlinie eingesetzt werden, das im nicht betätigten Zustand den Bremslösedruck erzeugt und mit zunehmender Betätigung den Bremslösedruck verringert. Mit zunehmender Betätigung des Druckregelventils kann somit der von dem Druckregelventil gesteuerte Bremslösedruck dosiert und gesteuert verringert werden, um die Federspeicherbremse dosierbar in die Bremsstellung zu betätigen und die Hilfsbremsfunktion der Betriebsbremse zu erzielen.

Gemäß der Erfindung ist das Druckregelventil an eine Druckversorgungsleitung einer Druckversorgungseinrichtung, an eine zu dem Bremslösedruckraum der Federspeicherbremse geführte Bremslösedruckleitung und an einen Behälter angeschlossen. Mit einem derartigen Druckregelventil kann auf einfache Weise durch Verbindung der Druckversorgungsleitung mit der Bremslösedruckleitung die Federspeicherbremse in die Lösestellung und durch Verbinden der Bremslösedruckleitung mit dem Behälter die Federspeicherbremse in die Bremsstellung betätigt werden.

Gemäß einer vorteilhaften Ausführungsform der Erfindung ist das Druckregelventil manuell betätigbar. Hierdurch ist eine kostengünstige Ausführung der Bremseinrichtung und des zweiten Bremskreises und somit der Hilfsbremse der Betriebsbremse erzielbar. Das Druckregelventil kann hierzu mit einem Pedal oder einem Handbremshebel zur Betätigung in Wirkverbindung stehen.

Gemäß einer vorteilhaften Weiterbildung der Erfindung ist die Federspeicherbremse als Feststellbremse ausgebildet, wobei das manuell betätigbare Druckregelventil mit einer Arretiereinrichtung versehen ist, mittels der das Druckregelventil in einem betätigten Zustand, in dem der Bremslösedruck abgebaut ist, arretierbar ist. Das für die Hilfsbremse der Betriebsbremse vorhandene Druckregelventil kann auch für die weitere Funktion einer Feststellbremse der Federspeicherbremse verwendet werden, mit der die Arbeitsmaschine im Stillstand festgesetzt werden kann. Bei der Ausführung des Druckregelventils als manuell betätigbares Druckregelventil ist die Feststellbremsfunktion auf einfache Weise erzielbar, wenn sich das Druckregelventil mittels einer Arretiereinrichtung in der betätigten Endstellung arretieren lässt, in der die Bremslösedruckleitung mit dem Behälter verbunden ist und somit der Bremslösedruck zum Behälter abgebaut ist.

Gemäß einer alternativen und vorteilhaften Ausführungsform der Erfindung ist das Druckregelventil elektrisch betätigbar. Mit einem elektrisch betätigbaren Druckregelventil, das zur Betätigung beispielsweise mit einer elektronischen Steuereinrichtung in Wirkverbindung steht, kann der zweite Bremskreises und somit die Hilfsbremse der Betriebsbremse in Abhängigkeit von der Betätigung eines Bedienelements, beispielsweise einer Fahrpedaleinrichtung oder eines Bremspedals, erfolgen, die von der elektronischen Steuereinrichtung erfassbar ist. Zudem ermöglicht es ein elektrisch betätigbares Druckregelventil, den zweiten Bremskreis und somit die Hilfsbremse der Betriebsbremse automatisiert von der elektronischen Steuereinrichtung anzusteuern, so dass eine Assistenzfunktion erzielt wird, mit der die Hilfsbremse automatisiert betätigt wird, sofern ein Defekt im ersten Bremskreis auftritt.

Gemäß einer vorteilhaften Weiterbildung der Erfindung ist der Bremslösedruckraum an ein Druckbegrenzungsventil angeschlossen. Ein derartiges, an den Bremslösedruckraum und somit die Bremslösedruckleitung angeschlossenes Druckbegrenzungsventil ermöglicht es auf einfache Weise, dass bei einem Ausfall des Druckregelventils und somit einem Ausfall des zweiten Bremskreises mit dem ersten Bremskreis die Arbeitsmaschine abgebremst werden kann, wobei das aus dem Bremslösedruckraum ausgeschobene Druckmittel über das Druckbegrenzungsventil auf einfache Weise zu einem Behälter abgeführt werden kann.

Zweckmäßigerweise ist hierbei der Öffnungsdruck des Druckbegrenzungsventils derart eingestellt, dass der Öffnungsdruck höher als der maximal mittels des Druckregelventils einstellbare Bremslösedruck ist. Hierdurch wird auf einfache Weise ermöglicht, dass bei einer maximal zulässigen Betätigungskraft an dem Bremspedal des ersten Bremskreises, die von dem Fahrer aufgebracht wird, mindestens eine Fahrzeugverzögerung erzielbar ist, die einer für die Straßenverkehrszulassung der Arbeitsmaschine vorgeschriebenen Fahrzeugverzögerung entspricht.

Gemäß einer vorteilhaften Weiterbildung der Erfindung ist die Federspeicherbremse als Feststellbremse ausgebildet, wobei in der zu dem Druckregelventil geführten Druckversorgungsleitung ein elektrisch betätigbares Abkoppelventil angeordnet ist und ein elektrisch betätigbares Schaltventil vorgesehen ist, das dem Bremslösedruckraum zugeordnet ist, wobei das Schaltventil eine im stromlosen Zustand wirksame Sperrstellung und eine elektrisch schaltbare, den Bremslösedruckraum mit einem Behälter verbindende Drucklosstellung aufweist, wobei zur Erzielung der Feststellbremse das Schaltventil in die Drucklosstellung bestromt ist und das Druckregelventil mittels des Abkoppelventils abgekoppelt ist. Bei der Ausführung des Druckregelventils als elektrisch oder manuell betätigbares Druckregelventil kann in Verbindung mit einem derartigen Abkoppelventil und einem derartigen Schaltventil auf einfache Weise die Federspeicherbremse als Feststellbremse betrieben werden. Eine derartige Feststellbremsfunktion ist hierbei auf einfache Weise erzielbar, wenn das Schaltventil durch eine elektrische Ansteuerung des Schaltventils in die Drucklosstellung beaufschlagt ist. Durch Ansteuern und Bestromen des Schaltventils und Abkoppeln des Druckregelventils kann ein sofortiger Druckabbau des in dem Bremslösedruckraum anstehenden Bremslösedruckes erzielt werden, so dass ein sofortiges Einfallen der Federspeicherbremse in die Bremsstellung erzielt werden kann. Durch die elektrische Betätigung des Abkoppelventils und des Schaltventils ist hierbei eine manuell betätigbare Feststellbremse und/oder eine automatische Feststellbremse auf einfache Weise erzielbar. Als manuell betätigbare Feststellbremse im Sinne der Erfindung soll eine von der Bedienperson durchführbare Betätigung der Federspeicherbremse in die Bremsstellung angesehen werden, die bei Fahrzeugstillstand oder während der Fahrt von der Bedienperson ausgelöst werden kann. Sofern das Abkoppelventil und das Schaltventil von einer elektronischen Steuereinrichtung betätigbar ist, die eingangsseitig mit einem entsprechenden, von dem Fahrer betätigbaren Bedienelement für die Feststellbremse in Verbindung steht, kann eine derartige manuell betätigbare Feststellbremse auf einfache Weise verwirklicht werden. Eine automatische Feststellbremse im Sinne der Erfindung bildet eine im Fahrzeugstillstand automatische Betätigung der Federspeicherbremse in die Bremsstellung. Mit der Funktion einer automatischen Feststellbremse, die im Fahrzeugstillstand von einer elektronischen Steuereinrichtung, die das Abkoppelventil und das Schaltventil ansteuert, automatisch eingeleitet wird, kann eine Fahrerunterstützung auf einfache Weise erzielt werden, indem beispielsweise bei einer stehenden Arbeitsmaschine oder einem Verlassen des Fahrerarbeitsplatzes die Federspeicherbremse automatisch in die Bremsstellung beaufschlagt wird.

Gemäß einer alternativen und vorteilhaften Weiterbildung der Erfindung ist die Federspeicherbremse als Feststellbremse ausgebildet, wobei in der zu dem Druckregelventil geführten Druckversorgungsleitung ein elektrisch betätigbares Abkoppelventil angeordnet ist, wobei zur Erzielung der Feststellbremse das Druckregelventil mittels des Abkoppelventils abgekoppelt ist und durch Betätigung des Druckregelventils der Bremslösedruckraum zu dem Behälter entlastet ist.

Bei der Ausführung des Druckregelventils als elektrisch oder manuell betätigbares Druckregelventil kann in Verbindung mit einem derartigen Abkoppelventil und der Entlastung des Bremslösedruckraums zu dem Behälter durch entsprechende Betätigung des Druckregelventils auf einfache Weise die Federspeicherbremse als Feststellbremse betrieben werden. Eine derartige Feststellbremsfunktion ist hierbei auf einfache Weise erzielbar, wenn mittels des Abkoppelventils durch eine elektrische Ansteuerung des Abkoppelventils das Druckregelventil von der Druckversorgung abgekoppelt wird und der Bremslösedruckraum durch Ansteuerung des Druckregelventils zu dem Behälter entlastet wird, so dass ein Einfallen der Federspeicherbremse in die Bremsstellung erzielt wird. Hierdurch ist eine manuell betätigbare Feststellbremse und/oder eine automatische Feststellbremse auf einfache Weise erzielbar.

Bevorzugt ist das Abkoppelventil als Schaltventil ausgebildet, das eine im stromlosen Zustand wirksame Sperrstellung und eine elektrisch schaltbare Durchflussstellung aufweist. Mit einem derartigen Abkoppelventil wird auf einfache Weise in der Sperrstellung eine Abkopplung des Druckregelventils für die Verwendung der Federspeicherbremse als Feststellbremse erzielt und in der Durchflussstellung die Steuerung der als Betriebsbremse verwendeten Federspeicherbremse zwischen der Bremsstellung und der Lösestellung ermöglicht.

Gemäß einer vorteilhaften Weiterbildung der Erfindung ermöglicht die Federspeicherbremse im stromlosen Zustand eine Notbremsung der Arbeitsmaschine mit einem reduzierten Bremsmoment, wobei ein weiteres elektrisch betätigbares Schaltventil vorgesehen ist, das dem Bremslösedruckraum zugeordnet ist, wobei das weitere Schaltventil eine im stromlosen Zustand wirksame Durchflussstellung aufweist, in der der Bremslösedruckraum über eine Druckabbaueinrichtung mit einem Behälter in Verbindung steht, und eine elektrisch schaltbare Sperrstellung aufweist, und das weitere Schaltventil zur Erzielung der Notbremsung unbestromt ist. Bei mobilen Arbeitsmaschinen ist eine Notbremsfunktion gewünscht, mit der die fahrende Arbeitsmaschine im Fehlerfall, beispielsweise einem Stromausfall, einem energielosen Zustand, oder bei einer Betätigung eines Not-Aus-Schalters mit einem reduzierten Bremsmoment abgebremst wird, um bei einem Flurförderzeug während der Notbremsung durch eine zu starke Verzögerung einen Abwurf einer aufgenommenen Last zu vermeiden. Mit einem weiteren Schaltventil, das im stromlosen Zustand den Bremslösedruckraum über eine Druckabbaueinrichtung mit dem Behälter verbindet, kann eine derartige Notbremsfunktion mit einem reduzierten Bremsmoment durch den an der Druckabbaueinrichtung erzielten Druckabbau des Bremslösedruckes auf einen definierten Wert oder einen zeitverzögerten Druckabbau des Bremslösedruckes auf einfache Weise erzielt werden.

Gemäß einer vorteilhaften Weiterbildung der Erfindung ist das weitere Schaltventil mit einer manuellen Betätigungseinrichtung versehen, mittels der das weitere Schaltventil in die Sperrstellung betätigbar ist, oder ist die Druckabbaueinrichtung manuell im Einstelldruck verstellbar, und ist eine Handpumpe vorgesehen, mittels der in dem Bremslösedruckraum ein Bremslösedruck erzeugbar ist. Durch Betätigen des weiteren Schaltventils in die Sperrstellung bzw. Verstellen des Einstelldrucks der Druckabbaueinrichtung auf einen Druckwert oberhalb des Bremslösedruckes kann mit der Handpumpe auf einfache Weise ein Bremslösedruck zum Lösen der Federspeicherbremse erzeugt werden, um eine stehende Arbeitsmaschine im stromlosen Zustand abschleppen zu können.

Gemäß einer vorteilhaften Ausführungsform der Erfindung weist die Bremseinrichtung einen modularen Aufbau auf, wobei zumindest zwei verschiedene Steuerventileinrichtungen vorgesehen sind, wobei eine erste Ausführungsform der Steuerventileinrichtung das Druckregelventil und das Druckbegrenzungsventil umfasst, und eine zweite Ausführungsform der Steuerventileinrichtung das Druckregelventil, das Druckbegrenzungsventil und mindestens eine der folgenden Komponenten umfasst:
- das Schaltventil und das Abkoppelventil,
- das weitere Schaltventil und die Druckabbaueinrichtung,
- die Handpumpe.

Bei der erfindungsgemäßen Bremseinrichtung mit dem als Muskelkraftbremse ausgebildeten ersten Bremskreis der von der Federspeicherbremse gebildeten Betriebsbremse wird mit besonderem Vorteil ein modularer Aufbau erzielbar, der es mit unterschiedlichen Steuerventilen ermöglicht, über die Steuerung des Bremslösedrucks verschiedene Ausbaustufen der Bremseinrichtung herzustellen. Sofern eine erste Ausführungsform der Steuerventileinrichtung nur das Druckregelventil, beispielsweise ein manuell betätigbares Druckregelventil, und das Druckbegrenzungsventil aufweist, kann eine Basisausführung mit einer manuell betätigbaren Hilfsbremse und einer manuell betätigbaren Feststellbremse hergestellt werden. Durch weitere Ausführungsformen der Steuerventileinrichtung mit dem Schaltventil und dem Abkoppelventil kann eine Ausführungsform mit einer automatischen Feststellbremse erzeugt werden. Sofern eine weitere Ausführungsformen der Steuerventileinrichtung das weitere Schaltventil und die Druckabbaueinrichtung umfasst, kann die Bremseinrichtung um die Funktion der Notbremsung der Arbeitsmaschine mit einem reduzierten Bremsmoment erweitert werden.

Bei der erfindungsgemäßen mobilen Arbeitsmaschine weist die Federspeicherbremse zur Betätigung zwischen der Bremsstellung und der Lösestellung eine Bremskolbeneinrichtung aufweist, wobei die Bremskolbeneinrichtung einen Bremskolben aufweisen kann, an dem sowohl der Bremsdruckraum als auch der Bremslösedruckraum ausgebildet ist. Alternativ kann die Bremskolbeneinrichtung einen ersten Bremskolben aufweisen, an dem der Bremsdruckraum ausgebildet ist, und zweiten Bremskolben aufweisen, an dem Bremslösedruckraum ausgebildet ist,

Besondere Vorteile ergeben sich, wenn gemäß einer Weiterbildung der Erfindung ein Drucksensor vorgesehen ist, der den in dem Bremslösedruckraum anstehenden Bremslösedruck erfasst. Mit einem derartigen Drucksensor kann in Verbindung mit einem elektrisch betätigbaren Druckregelventil durch entsprechende Ansteuerung des Druckregelventils eine Regelung des in dem Bremslösedruckraum anstehenden Bremslösedruckes erzielt werden. Weiterhin kann mit einem derartigen Drucksensor auf einfache Weise die Feststellbremsfunktion überwacht werden.

Die Arbeitsmaschine weist gemäß einer vorteilhaften Ausführungsform der Erfindung ein batterie-elektrisches Antriebssystem, ein verbrennungsmotorisch-elektrisches Antriebssystem oder ein verbrennungsmotorisch-hydrodynamisches Antriebssystem auf.

Weitere Vorteile und Einzelheiten der Erfindung werden anhand der in den schematischen Figuren dargestellten Ausführungsbeispiele näher erläutert. Hierbei zeigt
- Figur 1: eine erste Ausführungsform einer mobilen Arbeitsmaschine mit einer erfindungsgemäßen Bremseinrichtung,
- Figur 2: eine zweite Ausführungsform einer mobilen Arbeitsmaschine mit einer erfindungsgemäßen Bremseinrichtung,
- Figur 3: eine dritte Ausführungsform einer mobilen Arbeitsmaschine mit einer erfindungsgemäßen Bremseinrichtung und
- Figur 4: eine vierte Ausführungsform einer mobilen Arbeitsmaschine mit einer erfindungsgemäßen Bremseinrichtung.

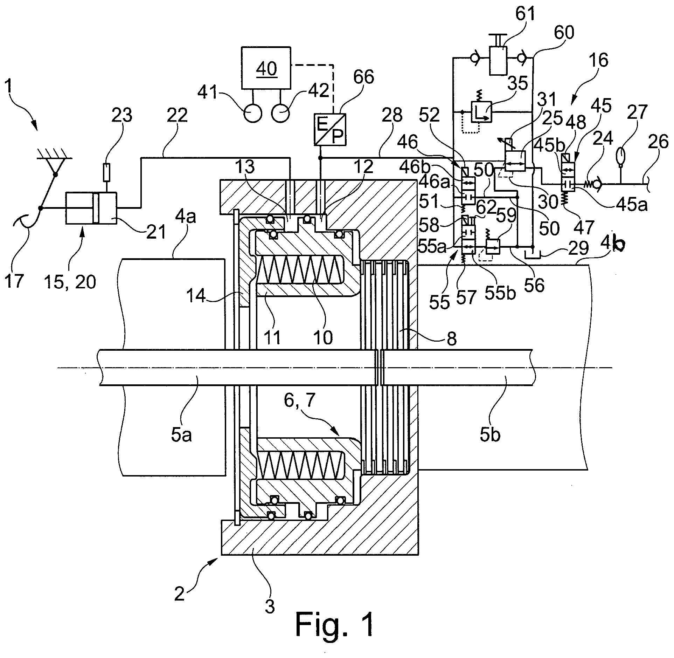

In den Figuren 1 bis 4 sind erfindungsgemäße Bremseinrichtungen 6 einer mobilen Arbeitsmaschine 1 dargestellt, beispielsweise eines Flurförderzeugs. Gleiche Bauteile sind hierbei mit gleichen Bezugsziffern versehen.

Dargestellt ist ein Ausschnitt einer Antriebsachse 2 der Arbeitsmaschine mit einem Achsgehäuse 3, in dem Fahrmotoren 4a, 4b zum Antrieb nicht näher dargestellter Antriebsräder angeordnet sind. Die Fahrmotoren 4a, 4b sind im dargestellten Ausführungsbeispiel als Elektromotoren ausgebildet. Zur Stromversorgung der Fahrmotoren 4a, 4b kann eine Traktionsbatterie vorgesehen werden, so dass die Arbeitsmaschine ein batterie-elektrisches Antriebssystem aufweist. Alternativ kann zur Stromversorgung der Fahrmotoren 4a, 4b ein von einem Verbrennungsmotor angetriebener elektrischer Generator vorgesehen werden, so dass die Arbeitsmaschine ein verbrennungsmotorisch-elektrisches Antriebssystem aufweist.

Mit den Fahrmotoren 4a, 4b in trieblicher Verbindung stehende Abtriebswellen 5a, 5b stehen mit einer Bremseinrichtung 6 in Wirkverbindung, mittels der die Abtriebswellen 5a, 5b abbremsbar und arretierbar sind. Die Bremseinrichtung 6 ist als hydraulisch lösbare Federspeicherbremse 7 ausgebildet. Im dargestellten Ausführungsbeispiel ist die Federspeicherbremse als Lamellenbremse, bevorzugt nasslaufende Lamellenbremse ausgebildet, mit abwechselnd an den Abtriebswellen 5a, 5b und an dem Achsgehäuse 3 angeordneten Bremslamellen 8.

Die Federspeicherbremse 7 ist von einer Federeinrichtung 10 in eine die Bremsstellung bildende Schließstellung beaufschlagt. Die Federspeicherbremse 7 weist zur Betätigung zwischen der Bremsstellung und einer Lösestellung eine Bremskolbeneinrichtung 11 auf, an der die Federeinrichtung 10 mit einem ersten Ende abgestützt ist. Die Bremskolbeneinrichtung 11 kann von einem einzelnen Kolben oder mehreren Kolben gebildet sein. Die Federeinrichtung 10 ist an einem zweiten Ende an einem Anschlag 14 abgestützt, der an dem Achsgehäuse 3 befestigt ist. Zwischen dem Achsgehäuse 3 und der Bremskolbeneinrichtung 11 ist ein Bremslösedruckraum 12 ausgebildet, wobei bei einem in dem Bremslösedruckraum 12 anstehenden hydraulischen Bremslösedruck die Federspeicherbremse 7 entgegen der Kraft der Federeinrichtung 10 in Richtung einer Lösestellung beaufschlagbar ist. Zwischen dem Achsgehäuse 3 und der Bremskolbeneinrichtung 11 ist ein gleichsinnig zur Federeinrichtung 10 wirkender Bremsdruckraum 13 ausgebildet, wobei bei einem in dem Bremsdruckraum 13 anstehenden hydraulischen Bremsdruck die Federspeicherbremse 7 in Richtung der Bremsstellung beaufschlagbar ist,

Die erfindungsgemäße Federspeicherbremse 7 ist als zweikreisige Betriebsbremse ausgebildet mit einem ersten Bremskreis 15 und einem zweiten Bremskreis 16.

Der erste Bremskreis 15 der Betriebsbremse ist als Muskelkraftbremse 20 ausgebildet. Die Muskelkraftbremsanlage 20 weist einen manuell betätigbaren Bremszylinder 21 auf, mittels dem bei einer manuellen Betätigung ein in dem Bremsdruckraum 13 anstehender Bremsduck erzeugbar ist.

Der Bremszylinder 21 ist von einem Fahrer mittels eines Bremspedals 17 betätigbar. Der Bremszylinder 21 steht mittels einer den erzeugten Bremsdruck führenden Bremsdruckleitung 22 mit dem Bremsdruckraum 13 der Federspeicherbremse 7 in Verbindung. Der erste Bremskreis 15 weist weiterhin einen Ausgleichsbehälter 23 auf, der an die Bremsdruckleitung 22 oder an einen Druckraum des Bremszylinders 21 angeschlossen ist. Von dem Fahrer wird somit durch Betätigen des Bremspedals 17 mittels des Bremszylinders 21 und eines gegebenenfalls vorhandenen Bremskraftverstärkers ein Bremsdruck in dem Bremsdruckraum 13 erzeugt, der die Federspeicherbremse 7 in die Bremsstellung betätigt.

Der zweite Bremskreis 16 der Betriebsbremse ist als Fremdkraftbremse ausgebildet. Die Fremdkraftbremse weist zur Steuerung der Federspeicherbremse 7 zwischen der Bremsstellung und der Lösestellung ein Druckregelventil 25 auf. Das Druckregelventil 25 ist an eine Druckversorgungsleitung 26 einer Druckversorgungseinrichtung 27, an eine zu dem Bremslösedruckraum 12 der Federspeicherbremse 7 geführte Bremslösedruckleitung 28 und an einen Behälter 29 angeschlossen. Die Druckversorgungseinrichtung 27 ist in den dargestellten Ausführungsbeispielen von einem Druckmittelspeicher gebildet. Alternativ oder zusätzlich kann die Druckversorgungseinrichtung 27 eine Hydraulikpumpe umfassen. In der Druckversorgungsleitung 26 ist in den dargestellten Ausführungsbeispielen ein in Richtung zu dem Druckregelventil 25 öffnendes Rückschlagventil 24 angeordnet.

Das Druckregelventil 25 ist in den vorliegenden Ausführungsbeispielen der Figuren 1 bis 4 als Druckregelventil, beispielsweise Proportional-Druckregelventil mit einer fallenden Kennlinie ausgebildet.

Das Druckregelventil 25 befindet sich im nicht betätigten Zustand in einer Lösestellung, in der die Bremslösedruckleitung 28 mit der Druckversorgungsleitung 26 in Verbindung steht und die Verbindung der Bremslösedruckleitung 28 zum Behälter 29 abgesperrt ist, so dass im Bremslösedruckraum 12 ein der Federeinrichtung 10 entgegenwirkender Bremslösedruck erzeugt wird und die Federspeicherbremse 7 in die Lösestellung beaufschlagt wird.

Bei einer Betätigung durch eine Betätigungseinrichtung 31 wird das Druckregelventil 25 zunehmend in eine die Bremslösedruckleitung 28 mit dem Behälter 29 verbindende Bremsstellung beaufschlagt, so dass durch einen dosierten Abbau des in der Bremslösedruckleitung 28 anstehenden Bremslösedruckes die Federspeicherbremse 7 zur Erzielung einer Betriebsbremsfunktion dosiert in die Bremsstellung beaufschlagt wird.

Das Druckregelventil 25 ist mittels einer Steuerleitung 30, die mit der Bremslösedruckleitung 28 in Verbindung steht, von dem in der Bremslösedruckleitung 28 anstehenden Bremslösedruck entgegen der Betätigungseinrichtung 31 und somit in Richtung der Lösestellung beaufschlagt.

Mit dem ersten Bremskreis 15 der Betriebsbremse kann durch Betätigen des Bremspedals 17 in dem Bremsdruckraum 13 ein Bremsdruck erzeugt und aufgebaut werden, der die Federspeicherbremse 7 in die Bremsstellung betätigt. Mit dem zweiten Bremskreis 16 der Betriebsbremse kann durch entsprechende Betätigung des Druckregelventils 25 in Richtung der Bremsstellung der in dem Bremslösedruckraum 12 anstehende Bremslösedruck gesteuert und dosiert abgebaut werden und somit die die Federspeicherbremse 7 in die Bremsstellung betätigt werden.

An die Bremslösedruckleitung 28 ist ein Druckbegrenzungsventil 35 angeschlossen, das ausgangsseitig mit dem Behälter 29 in Verbindung steht.

In dem Ausführungsbeispiel der Figur 1 ist das Druckregelventil 25 elektrisch betätigbar. Die Betätigungseinrichtung 31 ist hierzu als elektrische Betätigungseinrichtung, beispielsweise als Proportionalmagnet, ausgebildet. Zur Ansteuerung kann die Betätigungseinrichtung 31 mit einer elektronischen Steuereinrichtung 40 in Verbindung stehen. Eingangsseitig steht die Steuereinrichtung 40 mit einem von dem Fahrer bedienbaren Bedienelement 41, beispielsweise einem Fahrpedal oder einem Betätigungshebel, in Wirkverbindung, in Abhängigkeit von dessen Betätigung das Druckregelventil 25 in die Bremsstellung betätigt wird.

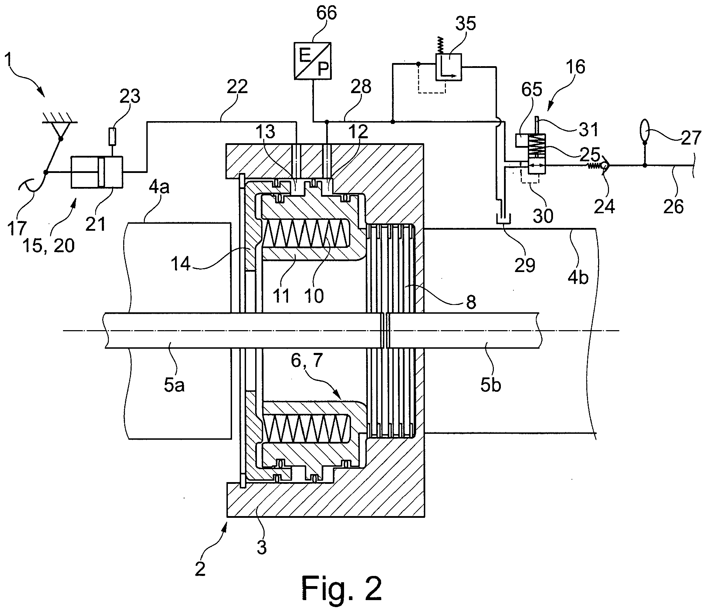

In den Figuren 2 bis 4 ist das Druckregelventil 25 manuell betätigbar. Die Betätigungseinrichtung 31 ist als Stößel ausgebildet, der zur Betätigung mit einem nicht näher dargestellten, von dem Fahrer bedienbaren Bedienelement, beispielsweise einem Handbremshebel oder einem Pedal, in Wirkverbindung, in Abhängigkeit von dessen Betätigung das Druckregelventil 25 in die Bremsstellung betätigt wird.

Die Bremseinrichtung 1 der Figuren 1 bis 4 ist weiterhin als Feststellbremse einsetzbar, mittels der die stehende Arbeitsmaschine im Stillstand arretierbar ist.

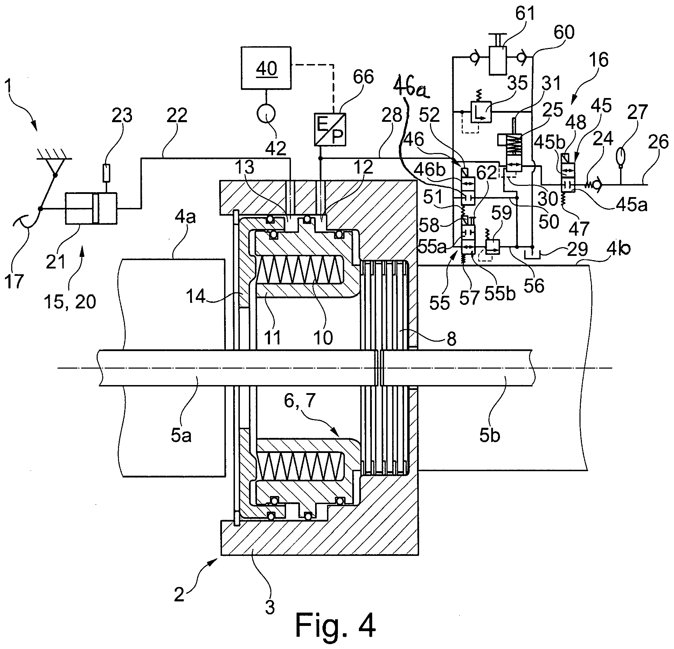

Hierzu ist bei den Ausführungsbeispielen der Figuren 1, 3 und 4 in der zu dem Druckregelventil 25 geführten Druckversorgungsleitung 26 ein elektrisch betätigbares Abkoppelventil 45 (Figuren 1, 3 und 4) angeordnet und ein elektrisch betätigbares Schaltventil 46 (Figuren 1 und 4) vorgesehen, das dem Bremslösedruckraum 12 zugeordnet ist. Mit dem Abkoppelventil 45 und dem Schaltventil 46 kann eine manuell betätigbare Feststellbremsfunktion und/oder eine automatische Feststellbremsfunktion erzielt werden.

Das Abkoppelventil 45 ist als Schaltventil ausgebildet, das eine im stromlosen Zustand wirksame Sperrstellung 45a und eine elektrisch schaltbare Durchflussstellung 45b aufweist. Das Abkoppelventil 45 ist hierzu von einer Feder 47 in die Sperrstellung 45a beaufschlagt und durch eine elektrische Betätigungseinrichtung 48, beispielsweise einen Schaltmagneten, in die Durchflussstellung 45b betätigbar. Das Abkoppelventil 45 steht zur elektronischen Ansteuerung auf nicht näher dargestellte Weise mit der elektronischen Steuereinrichtung 40 in Verbindung. Die Sperrstellung 45a kann bevorzugt als Sitzventil ausgebildet werden.

Das Schaltventil 46 weist eine Sperrstellung 46a und eine Drucklosstellung 46b auf und ist in einer die Bremslösedruckleitung 28 mit dem Behälter 29 verbindenden Steuerleitung 50 angeordnet. Das Schaltventil 46 ist von einer Feder 51 in die Sperrstellung 45a beaufschlagt und durch eine elektrische Betätigungseinrichtung 52, beispielsweise einen Schaltmagneten, in die Drucklosstellung 46b beaufschlagbar. Das Schaltventil 46 befindet sich somit im stromlosen Zustand in der Sperrstellung 46a. Die Sperrstellung 46a kann bevorzugt als Sitzventil ausgebildet werden. Bei einer Ansteuerung wird das Schaltventil 46 in die als Durchflussstellung ausgebildete Drucklosstellung 46b betätigt, in der der Bremslösedruckraum 12 über die Steuerleitung 50 direkt und ohne Zwischenschaltung weiterer Ventileinrichtungen mit dem Behälter 29 verbunden ist, um durch den Abbau des Bremslösedruckes in dem Bremslösedruckraum 12 die Feststellbremsfunktion zu erzielen.

Das Schaltventil 46 und das Abkoppelventil 45 sind mittels der elektronischen Steuereinrichtung 40 betätigbar. Als Bedienelement für die manuelle Feststellbremsfunktion kann ein von dem Fahrer bedienbares Bedienelement 42 vorgesehen sein, beispielsweise ein Schalter oder ein Handbremshebel, anhand dessen die Steuereinrichtung 40 das Schaltventil 46 und das Abkoppelventil 45 bestromt.

Die automatische Feststellbremsfunktion wird von der Steuereinrichtung 40 initiiert, beispielsweise im Fahrzeugstillstand oder nachdem eine Bedienperson einen Fahrersitz verlässt, wozu zum Erfassen dieser Betriebszustände geeignete nicht näher dargestellte Sensoren vorgesehen sein können.

In den Figuren 1 bis 4 ist weiterhin ein Drucksensor 66 vorgesehen, der mit der elektronischen Steuereinrichtung 40 in Wirkverbindung steht und den Druck in dem Bremslösedruckraum 12 erfasst. In der Figur 1 wird es mit dem Drucksensor 66 ermöglicht, den im Bremslösedruckraum 12 anstehenden Druck durch entsprechende Ansteuerung des Druckregelventils 25 zu steuern bzw. zu regeln. Weiterhin dient der Drucksensor 66 dazu, in den Figuren 1 bis 4 das Einfallen der Feststellbremse zu erfassen und die Feststellbremsfunktion zu überwachen.

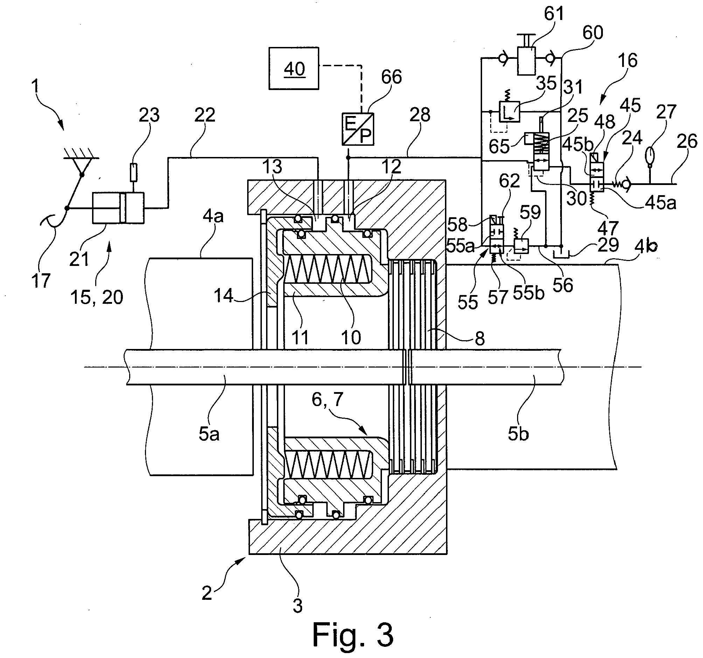

Um in den Ausführungsbeispielen der Figuren 2 und 3 eine manuelle Feststellbremsfunktion zu erzielen, ist das manuell betätigbare Druckregelventil 25 nach einer entsprechenden Betätigung in die Bremsstellung mittels einer Arretiereinrichtung 65 in der Bremsstellung arretierbar, in der der Bremslösedruck in dem Bremslösedruckraum 12 zum Behälter 29 entlastet ist und die Federspeicherbremse 7 von der Federeinrichtung 10 in die Bremsstellung betätigt ist.

Um im Fehlerfall, beispielsweise einem stromlosen bzw. energielosen Zustand infolge eines Stromausfalls, oder nach der Betätigung eines Not-Aus-Schalters, eine Notbremsung der Arbeitsmaschine mit einem reduzierten Bremsmoment zu erzielen, weist die Bremseinrichtung 1 der Figuren 1, 3 und 4 ein weiteres elektrisch betätigbares Schaltventil 55 mit einer Sperrstellung 55a und einer Durchflussstellung 55b auf, das dem Bremslösedruckraum 12 zugeordnet ist und in einer die Bremslösedruckleitung 28 mit dem Behälter 29 verbindenden Steuerleitung 56 angeordnet ist. Das Schaltventil 55 ist von einer Feder 57 in die Durchflussstellung 55b beaufschlagt und durch eine elektrische Betätigungseinrichtung 58, beispielsweise einen Schaltmagneten, in die Sperrstellung 55a beaufschlagbar. Die Sperrstellung 55a kann bevorzugt als Sitzventil ausgebildet werden. Das Schaltventil 55 befindet sich somit im stromlosen Zustand in der Durchflussstellung 55b und wird bei einer Ansteuerung in die Sperrstellung 55a beaufschlagt. In der Steuerleitung 56 ist stromab des Schaltventils 55 eine Druckabbaueinrichtung 59 angeordnet. Die Druckabbaueinrichtung 59 ist im dargestellten Ausführungsbeispiel als Druckventil, beispielsweise Druckbegrenzungsventil, ausgebildet. Die Druckabbaueinrichtung 59 kann jedoch ebenfalls von einer Blende, einer Drossel, einem Druckminderventil, einem Drosselventil oder einem Druckspeicher gebildet werden. Das Schaltventil 55 ist mittels der elektronischen Steuereinrichtung 40 betätigbar.

Um eine stehende Arbeitsmaschine im stromlosen Zustand abschleppen zu können, ist in den Ausführungsbeispielen der Figuren 1, 3 und 4 in einer den Behälter 29 mit der Bremslösedruckleitung 28 verbindenden Leitung 60 eine manuell betätigbare Handpumpe 61 angeordnet. Zum Lösen der Federspeicherbremse 7 mittels der Handpumpe 61 ist das Schaltventil 55 mit einer mechanischen Betätigungsvorrichtung 62 versehen, um das Schaltventil 55 bei stromloser Arbeitsmaschine manuell in die Sperrstellung 55a betätigen zu können und durch Betätigen der Handpumpe 61 einen Bremslösedruck zum Lösen der Federspeicherbremse 7 in dem Bremslösedruckraum 12 erzeugen zu können.

Die erfindungsgemäße Bremseinrichtung 1 der Figuren 1 bis 4 arbeitet wie folgt.

Für den Fahrbetrieb der Arbeitsmaschine ist die Federspeicherbremse 7 in die Lösestellung zu betätigen. Das in den Figuren 1, 3 und 4 vorhandene Abkoppelventil 45 ist hierzu in die Durchflussstellung 45a betätigt. Über das in die Lösestellung betätigte Druckregelventil 25 der Figuren 1 bis 4 wird somit von der Druckversorgungseinrichtung 27 ein Bremslösedruck in der Bremslösedruckleitung 28 und somit in dem Bremslösedruckraum 12 erzeugt, der die Bremskolbeneinrichtung 11 entgegen der Kraft der Federeinrichtung 10 in eine Lösestellung betätigt, in der die Federspeicherbremse 7 gelöst ist. Das durch die Bewegung der Bremskolbeneinrichtung 11 aus dem Bremsdruckraum 13 verdrängte Druckmittel, beispielsweise Hydrauliköl oder Bremsflüssigkeit, wird in den Ausgleichsbehälter 23 des ersten Bremskreises 15 gefördert.

Für den Fahrbetrieb der Arbeitsmaschine bei gelöster Federspeicherbremse 7 ist weiterhin das Schaltventil 55 der Figuren 1, 3 und 4 angesteuert und mittels der Betätigungseinrichtung 58 in der Sperrstellung 55a betätigt, um einen Abbau des Bremslösedruckes im Bremslösedruckraum 12 zum Behälter 29 zu verhindern. In den Figuren 1 und 4 ist für den Fahrbetrieb der Arbeitsmaschine bei gelöster Federspeicherbremse 7 weiterhin das Schaltventil 46 nicht angesteuert und befindet sich in der Sperrstellung 46a, um einen Abbau des Bremslösedruckes im Bremslösedruckraum 12 zum Behälter 29 zu verhindern.

Die erfindungsgemäße Bremseinrichtung 1 ermöglicht weiterhin eine manuelle und/oder eine automatische Feststellbremsfunktion.

Die manuelle Feststellbremsfunktion kann während einer Fahrt oder im Fahrzeugstillstand von dem Fahrer durchgeführt werden. Die automatische Feststellbremsfunktion wird von der elektronischen Steuereinrichtung 40 automatisch eingeleitet, beispielsweise im Fahrzeugstillstand der Arbeitsmaschine oder nach dem Verlassen eines Fahrersitzes durch die Bedienperson.

Bei den Figuren 1 und 4 wird in der Feststellbremsfunktion (manuell und automatisch) von der elektronischen Steuereinrichtung 40 das Schaltventil 46 in die Drucklosstellung 46b betätigt, in der der Bremslösedruckraum 12 mit dem Behälter 29 verbunden ist und somit der Bremslösedruck in dem Bremslösedruckraum 12 in den Behälter 29 entlastet ist. Von der elektronischen Steuereinrichtung 40 wird weiterhin das Abkoppelventil 45 in die Sperrstellung 45a betätigt, um zu verhindern, dass über das Druckregelventil 25 in der Bremslösedruckleitung 28 ein Bremslösedruck aus der Druckversorgungseinrichtung 27 aufgebaut werden kann.

Bei den Figuren 2 und 3, die mit einer manuellen Feststellbremsfunktion versehen sind, wird in der Feststellbremsfunktion das manuell betätigbare Druckregelventil 25 in die Bremsstellung beaufschlagt, in der der Bremslösedruckraum 12 mit dem Behälter 29 verbunden ist, und das Druckregelventil 25 mittels der Arretiereinrichtung 65 in der Bremsstellung festgesetzt, um die Feststellbremsfunktion mit in die Bremsstellung betätigter Federspeicherbremse 7 über eine gewünschte Zeitspanne halten zu können.

Durch die Entlastung des Bremslösedruckraums 12 zum Behälter in den Figuren 1 bis 4 wird die Bremskolbeneinrichtung 11 von der Federeinrichtung 10 in die Bremsstellung der Federspeicherbremse 7 betätigt. In den sich durch die Bewegung der Bremskolbeneinrichtung 11 vergrößernden Bremsdruckraum 13 wird Druckmittel aus dem Ausgleichsbehälter 23 des ersten Bremskreises 15 nachgesaugt.

Um während des Fahrbetriebs der Arbeitsmaschine bei in der Lösestellung befindlicher Federspeicherbremse die Arbeitsmaschine aktiv mittels der Betriebsbremse abbremsen zu können, stehen bei den Ausführungsformen der Figuren 1 bis 4 die beiden Bremskreise 15 und 16 zur Verfügung.

Bei einer Betätigung des Bremspedals 17 des ersten Bremskreises 15 wird über den Bremszylinder 21 und die Bremsdruckleitung 22 in dem Bremsdruckraum 13 ein Bremsdruck aufgebaut und in den Bremsdruckraum 13 Druckmittel geschoben, so dass die Bremskolbeneinrichtung 11 mit Unterstützung der Federeinrichtung 10 in die Bremsstellung betätigt wird. Durch die Bewegung der Bremskolbeneinrichtung 10 verringert sich der Bremslösedruckraum 12, wobei das aus dem Bremslösedruckraum 12 ausgeschobene Druckmittel über das Druckregelventil 25 des zweiten Bremskreises 16 und dessen Verbindung zu dem Behälter 29 in den Behälter 29 gefördert wird. Das von der Federspeicherbremse 7 erzeugte Bremsmoment ist hierbei abhängig von der Stärke der Betätigung des Bremspedals 17. Je mehr Druck über das Bremspedal 17 ausgebaut wird, desto mehr Bremsmoment wird an der Federspeicherbremse 7 erzeugt. Durch die Druckerhöhung des Bremsdruckes in dem Bremsdruckraum 13 erhält der Fahrer bei der Betätigung des Bremspedals 17 eine Kraftrückmeldung an dem Bremspedal 17, so dass der Fahrer die Abbremsung der Arbeitsmaschine einfach dosieren kann.

Bei einer Betätigung des Druckregelventils 25 des zweiten Bremskreises 16 in Richtung der Bremsstellung kann durch entsprechende Betätigung mittels der Betätigungseinrichtung 31 der in dem Bremslösedruckraum 12 anstehende Bremslösedruck dosiert und gesteuert bis auf das Druckniveau des Behälters 29 verringert werden, so dass eine Hilfsbremsfunktion der als Betriebsbremse eingesetzten Federspeicherbremse 7 erzielt wird. Bei der Figur 1 wird hierzu von der elektronischen Steuereinrichtung 40 das Druckregelventil 25 entsprechend elektrisch angesteuert. Das Signal für die Aktivierung der Betriebsbremse mittels des zweiten Bremskreises 16 wird durch Betätigung des Bedienelements 41, beispielsweise einem Fahrpedal oder einem Betätigungshebel, durch den Fahrer erzeugt. Alternativ oder zusätzlich kann die elektronische Steuereinrichtung 40 das Druckregelventil 25 für eine Betriebsbremsung automatisiert ansteuern, beispielsweise im Rahmen eines Assistenzsystems. Bei den Figuren 2 bis 4 erfolgt die Ansteuerung des Druckregelventils 25 manuell durch den Fahrer durch eine Betätigung des mit der Betätigungseinrichtung 31 in Wirkverbindung stehenden Bedienelements, beispielsweise eines Handbremshebels oder eines Pedals.

Bei entsprechender Betätigung des Druckregelventils 25 in Richtung der Bremsstellung wird in den Ausfühungsbeispielen der Figuren 1 bis 4 infolge des gesteuerten Abbaus des Bremslösedrucks in dem Bremslösedruckraum 12 die Bremskolbeneinrichtung 11 von der Federeinrichtung 10 in die Bremsstellung betätigt, wobei ein Bremsmoment der Federspeicherbremse 7 in Abhängigkeit von dem mittels des Druckregelventils 25 in dem Bremslösedruckraum 12 geregelten Bremslösedruck aufgebaut wird. In den sich vergrößernden Bremsdruckraum 13 strömt Druckmittel aus dem Ausgleichsbehälter 23 des ersten Bremskreises 15. Um das Bremsmoment weiter erhöhen zu können, kann zusätzlich das Bremspedal 17 betätigt werden, so dass in dem Bremslösedruckraum 13 ein Bremsdruck erzeugt wird und die Arbeitsmaschine stärker abgebremst wird.

Durch die beiden Bremskreise 15, 16 der Betriebsbremse in den Figuren 1 bis 4 wird erzielt, dass bei Ausfall eines der beiden Bremskreise 15 bzw. 16, beispielsweise durch Leckage, mit dem jeweils anderen Bremskreis 16 bzw. 15 die Arbeitsmaschine dosiert abgebremst werden kann.

Sofern der erste Bremskreis 15 ausfällt, beispielweise infolge einer Leckage der Bremsleitung 22, kann über das Bremspedal 17 kein Bremsdruck mehr in dem Bremsdruckraum 13 aufgebaut werden. Durch entsprechende Betätigung des Druckregelventils 25 des zweiten Bremskreises 16 der Figuren 1 bis 4 in Richtung der Bremsstellung kann der Bremslösedruck in dem Bremslösedruckraum 12 gesteuert und dosiert verringert werden, um eine Betriebsbremsung der Arbeitsmaschine mittels der Federspeicherbremse 7 zu ermöglichen, die von der Federeinrichtung 10 in die Bremsstellung betätigt wird. Durch entsprechende Betätigung des Druckregelventils 25 kann somit das Bremsmoment der Federspeicherbremse 7 dosiert werden. In der Figur 1 kann durch entsprechende elektrische Ansteuerung des elektrisch betätigbaren Druckregelventils 25 das Bremsmoment der Betriebsbremse dosiert werden. In den Figuren 2 bis 4, in denen das Druckregelventil 25 manuell betätigbar und die Betätigungseinrichtung 31 zur Betätigung mit einem nicht näher dargestellten, von dem Fahrer bedienbaren Bedienelement, beispielsweise einem Handbremshebel oder einem Pedal, in Wirkverbindung steht, kann der Fahrer durch entsprechende Betätigung des Bedienelements dosiert ein Bremsmoment mittels des manuell betätigten Druckregelventils 25 erzeugen.

Sofern der zweite Bremskreis 16 ausfällt, beispielsweise infolge eines Defekts oder eines Ausfalls des Druckregelventils 25, kann durch Betätigen des Bremspedals 17 des ersten Bremskreises 15 in dem Bremsdruckraum 13 ein Bremsdruck und somit ein Bremsmoment der Federspeicherbremse 7 erzeugt werden. Das Druckmittel aus dem sich verkleinernden Bremslösedruckraum 12 wird hierbei über das sich öffnende Druckbegrenzungsventil 35 des zweiten Bremskreises in den Behälter 29 abgeführt. Das Druckbegrenzungsventil 35 ist hierbei derart ausgelegt und auf einen derartigen Öffnungsdruck eingestellt, dass das Druckbegrenzungsventil 35 erst oberhalb des maximalen Bremslösedruckes, der mittels des Druckregelventils 25 erzeugbar und regelbar ist, öffnet und bei maximal zulässiger Betätigungskraft an dem Bremspedal 17 eine Mindestverzögerung der Arbeitsmaschine entsprechend den Anforderungen der Straßenverkehrszulassungsordnung für die Arbeitsmaschine erzielt wird.

In den Ausführungsbeispielen der Figuren 1, 3 und 4 ist zusätzlich eine Notbremsung der fahrenden Arbeitsmaschine mit einem reduzierten Bremsmoment erzielbar, beispielsweise bei Stromausfall, einer energielosen Arbeitsmaschine oder bei der Betätigung eines Not-Aus-Schalters. Bei einer als Flurförderzeug ausgebildeten Arbeitsmaschine ist das reduzierte Bremsmoment derart gewählt, dass beim Abbremsen ein Lastabwurf einer mit einem Lastaufnahmemittel aufgenommenen Last vermieden wird. Im stromlosen bzw. energielosen Zustand befinden sich in den Figuren 1 und 4 jeweils das Abkoppelventil 45 und das Schaltventil 46 in den entsprechenden Sperrstellungen 45a, 46a. Das Schaltventil 55 wird im stromlosen Zustand in die Durchflussstellung 55b beaufschlagt, in der der in der Bremslösedruckleitung 28 anstehende Bremslösedruck über die Druckabbaueinrichtung 59 zum Behälter 29 abgebaut wird und infolge dessen die Arbeitsmaschine mit einem reduzierten Bremsmoment in den Stillstand abgebremst wird. In der Durchflussstellung 55b des Schaltventils 55 wird der Bremslösedruck auf die beispielsweise als Druckbegrenzungsventil ausgebildete Druckabbaueinrichtung 59 geschaltet. Das Druckbegrenzungsventil lässt soviel Druckmittel in den Behälter 29 abströmen, bis der Bremslösedruck in dem Bremslösedruckraum 12 auf den Öffnungsdruck des Druckbegrenzungsventils gefallen ist und dem Öffnungsdruck des Druckbegrenzungsventils entspricht. Die Bremskolbeneinrichtung 11 wird somit von der Federeinrichtung 10 in Abhängigkeit von dem noch in dem Bremslösedruckraum 12 vorhandenen Bremslösedruck in die Bremsstellung betätigt. Der sich aus der Bewegung der Bremskolbeneinrichtung 11 vergrößernde Bremsdruckraum 13 saugt Druckmittel aus dem Ausgleichsbehälter 23 an. Mit der als Druckbegrenzungsventil ausgebildeten Druckabbaueinrichtung 59 kann somit ein definierter Bremslösedruck eingestellt werden, der ein definiertes Bremsmoment erzeugt.

In den Figuren 1 bis 4 ist durch die Betätigung des Bremspedals 17 des ersten Bremskreises 15 bei der Notbremsung ein Zubremsen möglich, um die Fahrzeugabbremsung zu verstärken und die Verzögerung der Arbeitsmaschine zu erhöhen.

In den Ausführungsbeispielen der Figuren 1, 3 und 4 wird zudem ermöglicht, zum Abschleppen der Arbeitsmaschine die Federspeicherbremse 7 in die Lösestellung zu betätigen. Hierzu kann das Schaltventil 55 mittels der Betätigungsvorrichtung 62 manuell in die Sperrstellung 55a betätigt werden, so dass durch Betätigen der Handpumpe 61 ein Bremslösedruck in der Bremslösedruckleitung 28 erzeugt werden kann, mit dem die Federspeicherbremse 7 in die Lösestellung betätigt wird. Beim Abschleppen der Arbeitsmaschine und in die Lösestellung betätigter Federspeicherbremse 7 kann mittels des ersten Bremskreises 15 durch eine Betätigung des Bremspedals 17 die Arbeitsmaschine abgebremst werden.

Die erfindungsgemäße, als Betriebsbremse arbeitende Bremseinrichtung 1 der Figuren 1 bis 4 weist als Vorteil auf, dass der Fahrer beim Bremsbeginn eine Kraftrückmeldung an dem Bremspedal 17 des ersten Bremskreises 15 erhält, so dass ein Überbremsen der Arbeitsmaschine 1 wirksam vermieden werden kann und eine gute Dosierbarkeit der Betriebsbremse mittels des ersten Bremskreises 15 ermöglicht wird. Zudem weist die erfindungsgemäße Bremseinrichtung 1 eine geringen Bauaufwand für die zweikreisige Ausführung der Betriebsbremse mit den beiden Bremskreisen 15, 16 auf.

Zudem ermöglicht die erfindungsgemäße Bremseinrichtung 1 mit den beiden Bremskreisen 15, 16 der Betriebsbremse einen modularen Aufbau.

Als einfachste und kostengünstigste Variante kann die Ausführungsform der Figur 2 geschaffen werden, die eine zweikreisige Betriebsbremse aufweist und mit dem manuell betätigten Druckregelventil 25 eine manuell betätigbare Hilfsbremse (zweiter Bremskreis 16 der Betriebsbremse) und eine manuell betätigbare Feststellbremse aufweist, beispielsweise mittels einer Betätigung des Druckregelventils 25 durch einen Seilzug. Durch Erweiterung um das Schaltventil 55 und die Druckabbaueinrichtung 59 - wie in der Figur 3 dargestellt - ist eine Ausbauvariante erzielbar, die zusätzlich zu einer manuell betätigbaren Hilfsbremse (zweiter Bremskreis 16 der Betriebsbremse) und einer manuell betätigbaren Feststellbremse eine Notabbremsung mit einem reduzierten Bremsmoment im Fehlerfall ermöglicht. Durch Erweiterung um das Schaltventil 46 und das Abkoppelventil 45 - wie in der Figur 4 dargestellt ist - kann ausgehend von den Figuren 2 oder 3 eine Ausbauvariante mit der Funktion einer automatischen Feststellbremse erzielt werden. In der Figur 4 ist somit eine manuell betätigbare Hilfsbremse (zweiter Bremskreis 16 der Betriebsbremse) mit einer manuell und/oder automatisch betätigbaren Feststellbremse (Schaltventil 46) kombiniert. Alternativ zu dem manuell betätigten Druckregelventil 25 der Figuren 2 bis 4 kann das Druckregelventil 25 gemäß der Figur 1 elektrisch angesteuert werden, wodurch die Hilfsbetriebsbremse des zweiten Bremskreises 16 der Betriebsbremse eine elektrisch ansteuerbare Fremdkraftbremse bildet, die von dem Fahrer aktiviert werden kann oder mittels der elektronischen Steuereinrichtung automatisiert im Rahmen einer Assistenzfunktion angesteuert werden kann.

Die Erfindung ist nicht auf die in den Figuren 1 bis 4 dargestellten Ausführungsbeispiele beschränkt.

Das Abkoppelventil 45, das Schaltventil 46 und das weitere Schaltventil 55 können anstelle der in den Figuren dargestellten Ausführung, in denen diese Ventile jeweils als Zweistellung-Zweianschluss-Ventil ausgebildet sind, in ein Steuerventil oder in zwei Steuerventile zusammengefasst werden.

Es versteht sich, dass in der Figur 1 das Schaltventil 46 und/oder das Schaltventil 55 mit der Druckabbaueinrichtung 59 sowie das Abkoppelventil 45 entfallen kann, sofern die Funktion einer automatischen Feststellbremse und die Funktion der Notbremsung mit einem reduzierten Bremsmoment nicht erforderlich sind.

Anstelle der Bremskolbeneinrichtung 11 in den Figuren 1 bis 4, an der der Bremsdruckraum 13 und der Bremslösedruckraum 12 ausgebildet ist, können zwei Bremskolben verwendet, von den ein Bremskolben den Bremsdruckraum 13 bildet und der anderer Bremskolben den Bremslösedruckraum 12 bildet.

Zudem ist die Erfindung nicht auf die dargestellte Ausführungsform beschränkt, bei der die Bremseinrichtung 6 zwei Abtriebswellen 5a, 5b abbremst. Es versteht sich, dass die Bremseinrichtung 6 nur eine Abtriebswelle 5a bzw. 5b abbremsen kann, so dass bei einer Antriebsachse zwei Bremseinrichtungen 6 vorhanden sind.

## Patentansprüche

1. Mobile Arbeitsmaschine (1), insbesondere Flurförderzeug, mit einer Bremseinrichtung (6), die als hydraulisch lösbare Federspeicherbremse (7) und als zweikreisige Betriebsbremse, mittels der ein Fahrer die fahrende Arbeitsmaschine dosiert abbremsen kann, ausgebildet ist, wobei die Federspeicherbremse (7) mittels eines in einem Bremslösedruckraum (12) anstehenden hydraulischen Bremslösedrucks in Richtung einer Lösestellung beaufschlagbar ist und mittels eines in einem Bremsdruckraum (13) anstehenden hydraulischen Bremsdruckes in Richtung einer Bremsstellung beaufschlagbar ist, **dadurch gekennzeichnet, dass** ein erster Bremskreis (15) der Betriebsbremse von einer Muskelkraftbremse (20) gebildet ist, die einen manuell betätigbaren Bremszylinder (21) aufweist, mittels dem bei einer manuellen Betätigung der in dem Bremsdruckraum (13) anstehende Bremsduck erzeugbar ist, und ein zweiter Bremskreis (16) der Betriebsbremse von einer Fremdkraftbremse gebildet ist, die ein Druckregelventil (25) aufweist, mittels dem der in dem Bremslösedruckraum (12) anstehende Bremslösedruck dosiert verringerbar ist, wobei das Druckregelventil (25) als Proportional-Druckregelventil ausgebildet ist, wobei das Druckregelventil (25) an eine Druckversorgungsleitung (26) einer Druckversorgungseinrichtung (27), an eine zu dem Bremslösedruckraum (12) der Federspeicherbremse (7) geführte Bremslösedruckleitung (28) und an einen Behälter (29) angeschlossen ist und wobei das Druckregelventil (25) durch eine Betätigungseinrichtung (31) in Richtung einer die Bremslösedruckleitung (28) mit dem Behälter (29) verbindende Bremsstellung beaufschlagt ist und mittels einer Steuerleitung (30), die mit der Bremslösedruckleitung (28) in Verbindung steht, von dem in der Bremslösedruckleitung (28) anstehenden Bremslösedruck entgegen der Betätigungseinrichtung (31) in Richtung einer die Bremslösedruckleitung (28) mit der Druckversorgungsleitung (26) verbindenden Lösestellung beaufschlagt ist.

2. Mobile Arbeitsmaschine nach Anspruch 1, **dadurch gekennzeichnet, dass** der Bremszylinder (21) des ersten Bremskreises (15) von einem Bremspedal (17) betätigt ist und mittels einer Bremsdruckleitung (22) mit dem Bremsdruckraum (13) der Federspeicherbremse (7) in Verbindung steht, wobei der erste Bremskreis (15) einen Ausgleichsbehälter (23) aufweist.

3. Mobile Arbeitsmaschine nach Anspruch 1 oder 2, **dadurch gekennzeichnet, dass** das Druckregelventil (25) als Proportional-Druckregelventil mit einer fallenden Ventilkennlinie ausgebildet ist

4. Mobile Arbeitsmaschine nach einem der Ansprüche 1 bis 3, **dadurch gekennzeichnet, dass** das Druckregelventil (25) manuell betätigbar ist.

5. Mobile Arbeitsmaschine nach Anspruch 4, **dadurch gekennzeichnet, dass** die Federspeicherbremse (7) als Feststellbremse ausgebildet ist, wobei das manuell betätigbare Druckregelventil (25) mit einer Arretiereinrichtung (65) versehen ist, mittels der das Druckregelventil (25) in einem betätigten Zustand, in dem der Bremslösedruck abgebaut ist, arretierbar ist.

6. Mobile Arbeitsmaschine nach einem der Ansprüche 1 bis 3, **dadurch gekennzeichnet, dass** das Druckregelventil (25) elektrisch betätigbar ist.

7. Mobile Arbeitsmaschine nach einem der Ansprüche 1 bis 6, **dadurch gekennzeichnet, dass** das Druckregelventil (25) in Abhängigkeit von einem Bedienelement (41) betätigbar ist.

8. Mobile Arbeitsmaschine nach Anspruch 6 oder 7, **dadurch gekennzeichnet, dass** das Druckregelventil (25) von einer elektronischen Steuereinrichtung (40) automatisiert betätigbar ist.

9. Mobile Arbeitsmaschine nach einem der Ansprüche 1 bis 8, **dadurch gekennzeichnet, dass** der Bremslösedruckraum (12) an ein Druckbegrenzungsventil (35) angeschlossen ist.

10. Mobile Arbeitsmaschine nach Anspruch 9, **dadurch gekennzeichnet, dass** der Öffnungsdruck des Druckbegrenzungsventils (35) derart eingestellt ist, dass der Öffnungsdruck höher als der maximal mittels des Druckregelventils (25) einstellbare Bremslösedruck ist.

11. Mobile Arbeitsmaschine nach einem der Ansprüche 1 bis 4 oder 6 bis 10, **dadurch gekennzeichnet, dass** die Federspeicherbremse (7) als Feststellbremse ausgebildet ist, wobei in der zu dem Druckregelventil (25) geführten Druckversorgungsleitung (26) ein elektrisch betätigbares Abkoppelventil (45) angeordnet ist und ein elektrisch betätigbares Schaltventil (46) vorgesehen ist, das dem Bremslösedruckraum (12) zugeordnet ist, wobei das Schaltventil (46) eine im stromlosen Zustand wirksame Sperrstellung (46a) und eine elektrisch schaltbare, den Bremslösedruckraum (12) mit einem Behälter (29) verbindende Drucklosstellung (46b) aufweist, wobei zur Erzielung der Feststellbremse das Schaltventil (46) in die Drucklosstellung (46b) bestromt ist und das Druckregelventil (25) mittels des Abkoppelventils (45) abgekoppelt ist.

12. Mobile Arbeitsmaschine nach einem der Ansprüche 1 bis 10, **dadurch gekennzeichnet, dass** die Federspeicherbremse (7) als Feststellbremse ausgebildet ist, wobei in der zu dem Druckregelventil (25) geführten Druckversorgungsleitung (26) ein elektrisch betätigbares Abkoppelventil (45) angeordnet ist, wobei zur Erzielung der Feststellbremse das Druckregelventil (25) mittels des Abkoppelventils (45) abgekoppelt ist und durch Betätigung des Druckregelventils (25) der Bremslösedruckraum (12) zu dem Behälter (29) entlastet ist.

13. Mobile Arbeitsmaschine nach Anspruch 11 oder 12, **dadurch gekennzeichnet, dass** das Abkoppelventil (45) als Schaltventil ausgebildet ist, das eine im stromlosen Zustand wirksame Sperrstellung (45a) und eine elektrisch schaltbare Durchflussstellung (45b) aufweist.

14. Mobile Arbeitsmaschine nach einem der Ansprüche 1 bis 13, **dadurch gekennzeichnet, dass** die Federspeicherbremse (7) im stromlosen Zustand eine Notbremsung der Arbeitsmaschine mit einem reduzierten Bremsmoment ermöglicht, wobei ein weiteres elektrisch betätigbares Schaltventil (55) vorgesehen ist, das dem Bremslösedruckraum (12) zugeordnet ist, wobei das weitere Schaltventil (55) eine im stromlosen Zustand wirksame Durchflussstellung (55b) aufweist, in der der Bremslösedruckraum (12) über eine Druckabbaueinrichtung (59) mit einem Behälter (29) in Verbindung steht, und eine elektrisch schaltbare Sperrstellung (55a) aufweist, und das weitere Schaltventil (55) zur Erzielung der Notbremsung unbestromt ist.

15. Mobile Arbeitsmaschine nach Anspruch 14, **dadurch gekennzeichnet, dass** das weitere Schaltventil (55) mit einer manuellen Betätigungseinrichtung (62) versehen ist, mittels der das weitere Schaltventil (55) in die Sperrstellung (55a) betätigbar ist, oder die Druckabbaueinrichtung (59) manuell im Einstelldruck verstellbar ist, und eine Handpumpe (61) vorgesehen ist, mittels der in dem Bremslösedruckraum (12) ein Bremslösedruck erzeugbar ist.

16. Mobile Arbeitsmaschine nach einem der Ansprüche 1 bis 15, **dadurch gekennzeichnet, dass** die Bremseinrichtung (6) einen modularen Aufbau aufweist, wobei zumindest zwei verschiedene Steuerventileinrichtungen vorgesehen sind, wobei eine erste Ausführungsform der Steuerventileinrichtung das Druckregelventil (25) und das Druckbegrenzungsventil (35) umfasst, und eine zweite Ausführungsform der Steuerventileinrichtung das Druckregelventil (25), das Druckbegrenzungsventil (35) und mindestens eine der folgenden Komponenten umfasst:
• das Schaltventil (46) und das Abkoppelventil (45),
• das weitere Schaltventil (55) und die Druckabbaueinrichtung (59),
• die Handpumpe (61).

17. Mobile Arbeitsmaschine nach einem der Ansprüche 1 bis 16, **dadurch gekennzeichnet, dass** die Federspeicherbremse (7) zur Betätigung zwischen der Bremsstellung und der Lösestellung eine Bremskolbeneinrichtung (11) aufweist, wobei die Bremskolbeneinrichtung (11) einen Bremskolben aufweist, an dem der Bremsdruckraum (13) und der Bremslösedruckraum (12) ausgebildet ist, oder wobei die Bremskolbeneinrichtung (11) einen ersten Bremskolben aufweist, an dem der Bremsdruckraum (13) ausgebildet ist, und zweiten Bremskolben aufweist, an dem Bremslösedruckraum (12) ausgebildet ist,

18. Mobile Arbeitsmaschine nach einem der Ansprüche 1 bis 17, **dadurch gekennzeichnet, dass** ein Drucksensor (66) vorgesehen ist, der den in dem Bremslösedruckraum (12) anstehenden Bremslösedruck erfasst.

19. Mobile Arbeitsmaschine nach einem der Ansprüche 1 bis 18, **dadurch gekennzeichnet, dass** die Arbeitsmaschine (1) ein batterie-elektrisches Antriebssystem, ein verbrennungsmotorisch-elektrisches Antriebssystem oder ein verbrennungsmotorisch-hydrodynamisches Antriebssystem aufweist.

## Claims

1. Mobile working machine (1), in particular industrial truck, with a braking device (6) which is configured as a hydraulically releasable spring-loaded brake (7) and as a two-circuit service brake, by means of which a driver can brake the moving working machine in measured form, wherein the spring-loaded brake (7) is chargeable in the direction of a release position by means of a hydraulic brake release pressure present in a brake release pressure chamber (12) and is chargeable in the direction of a braking position by means of a hydraulic brake pressure present in a brake pressure chamber (13), **characterized in that** a first brake circuit (15) of the service brake is formed by a manual brake (20) which has a manually actuable brake cylinder (21) by means of which, in the event of a manual actuation, the brake pressure present in the brake pressure chamber (13) can be generated, and a second brake circuit (16) of the service brake is formed by a power brake which has a pressure control valve (25) by means of which the brake release pressure present in the brake release pressure chamber (12) is reducible in measured form, wherein the pressure control valve (25) is configured as a proportional pressure control valve, wherein the pressure control valve (25) is connected to a pressure supply line (26) of a pressure supply device (27), to a brake release pressure line (28) guided to the brake release pressure chamber (12) of the spring-loaded brake (7), and to a container (29), and wherein the pressure control valve (25) is charged by an actuating device (31) in the direction of a braking position connecting the brake release pressure line (28) to the container (29) and is charged by means of a control line (30), which is connected to the brake release pressure line (28), counter to the actuating device (31) by the brake release pressure present in the brake release pressure line (28) in the direction of a release position connecting the brake release pressure line (28) to the pressure supply line (26).

2. Mobile working machine according to Claim 1, **characterized in that** the brake cylinder (21) of the first brake circuit (15) is actuated by a brake pedal (17) and is connected to the brake pressure chamber (13) of the spring-loaded brake (7) by means of a brake pressure line (22), wherein the first brake circuit (15) has a compensating container (23).

3. Mobile working machine according to Claim 1 or 2, **characterized in that** the pressure control valve (25) is configured as a proportional pressure control valve with a falling valve characteristic curve.

4. Mobile working machine according to one of Claims 1 to 3, **characterized in that** the pressure control valve (25) is actuable manually.

5. Mobile working machine according to Claim 4, **characterized in that** the spring-loaded brake (7) is configured as a parking brake, wherein the manually actuable pressure control valve (25) is provided with a locking device (65) by means of which the pressure control valve (25) is lockable in an actuated state in which the brake release pressure is dissipated.

6. Mobile working machine according to one of Claims 1 to 3, **characterized in that** the pressure control valve (25) is actuable electrically.

7. Mobile working machine according to one of Claims 1 to 6, **characterized in that** the pressure control valve (25) is actuable depending on an operating element (41).

8. Mobile working machine according to Claim 6 or 7, **characterized in that** the pressure control valve (25) is actuable in an automated manner by an electronic control device (40).

9. Mobile working machine according to one of Claims 1 to 8, **characterized in that** the brake release pressure chamber (12) is connected to a pressure-limiting valve (35) .

10. Mobile working machine according to Claim 9, **characterized in that** the opening pressure of the pressure-limiting valve (35) is set in such a manner that the opening pressure is higher than the brake release pressure maximally settable by means of the pressure control valve (25).

11. Mobile working machine according to one of Claims 1 to 4 or 6 to 10, **characterized in that** the spring-loaded brake (7) is configured as a parking brake, wherein, in the pressure supply line (26) guided to the pressure control valve (25), an electrically actuable decoupling valve (45) is arranged and an electrically actuable switching valve (46) is provided which is assigned to the brake release pressure chamber (12), wherein the switching valve (46) has a locking position (46a), which is effective in the currentless state, and an electrically switchable pressureless position (46b) connecting the brake release pressure chamber (12) to a container (29), wherein, in order to obtain the parking brake, the switching valve (46) is energized into the pressureless position (46b) and the pressure control valve (25) is decoupled by means of the decoupling valve (45).

12. Mobile working machine according to one of Claims 1 to 10, **characterized in that** the spring-loaded brake (7) is configured as a parking brake, wherein, in the pressure supply line (26) guided to the pressure control valve (25), an electrically actuable decoupling valve (45) is arranged, wherein, in order to obtain the parking brake, the pressure control valve (25) is decoupled by means of the decoupling valve (45) and, by actuation of the pressure control valve (25), the brake release pressure chamber (12) is discharged to the container (29) .

13. Mobile working machine according to Claim 11 or 12, **characterized in that** the decoupling valve (45) is configured as a switching valve which has a blocking position (45a), which is effective in the currentless state, and an electrically switchable throughflow position (45b).

14. Mobile working machine according to one of Claims 1 to 13, **characterized in that**, in the currentless state, the spring-loaded brake (7) permits emergency braking of the working machine with a reduced braking torque, wherein a further electrically actuable switching valve (55) is provided which is assigned to the brake release pressure chamber (12), wherein the further switching valve (55) has a throughflow position (55b), which is effective in the currentless state and in which the brake release pressure chamber (12) is connected to a container (29) via a pressure-dissipating device (59), and has an electrically switchable blocking position (55a), and the further switching valve (55) is unenergized in order to obtain the emergency braking.

15. Mobile working machine according to Claim 14, **characterized in that** the further switching valve (55) is provided with a manual actuating device (62) by means of which the further switching valve (55) is actuable into the blocking position (55a), or the pressure-dissipating device (59) is adjustable manually in the setting pressure, and a hand pump (61) is provided by means of which a brake release pressure can be generated in the brake release pressure chamber (12).

16. Mobile working machine according to one of Claims 1 to 15, **characterized in that** the brake device (6) has a modular construction, wherein at least two different control valve devices are provided, wherein a first embodiment of the control valve device comprises the pressure control valve (25) and the pressure-limiting valve (35), and a second embodiment of the control valve device comprises the pressure control valve (25), the pressure-limiting valve (35) and at least one of the following components:
• the switching valve (46) and the decoupling valve (45),
• the further switching valve (55) and the pressure-dissipating device (59),
• the hand pump (61).

17. Mobile working machine according to one of Claims 1 to 16, **characterized in that** the spring-loaded brake (7) has a brake piston device (11) for the actuation between the braking position and the release position, wherein the brake piston device (11) has a brake piston on which the brake pressure chamber (13) and the brake release pressure chamber (12) are configured, or wherein the brake piston device (11) has a first brake piston on which the brake pressure chamber (13) is configured and has a second brake piston on which the brake release pressure chamber (12) is configured.

18. Mobile working machine according to one of Claims 1 to 17, **characterized in that** a pressure sensor (66) is provided which detects the brake release pressure present in the brake release pressure chamber (12).

19. Mobile working machine according to one of Claims 1 to 18, **characterized in that** the working machine (1) has a battery electric drive system, an internal combustion engine electric drive system or an internal combustion engine hydrodynamic drive system.

## Revendications

1. Machine de travail mobile (1), en particulier chariot de manutention, comportant un dispositif de freinage (6) qui est réalisé sous forme de frein à accumulateur à ressort (7) pouvant être desserré de manière hydraulique et sous forme de frein de service à deux circuits, au moyen duquel un conducteur peut freiner de manière mesurée la machine de travail qui roule, le frein à accumulateur à ressort (7) pouvant être sollicité en direction d'une position de desserrage au moyen d'une pression de desserrage de frein hydraulique existant dans un espace de pression de desserrage de frein (12) et pouvant être sollicité en direction d'une position de freinage au moyen d'une pression de freinage hydraulique existant dans un espace de pression de freinage (13), **caractérisée en ce qu'**un premier circuit de frein (15) du frein de service est formé par un frein à force musculaire (20) qui présente un cylindre de frein (21) pouvant être actionné manuellement, au moyen duquel la pression de freinage existant dans l'espace de pression de freinage (13) peut être produite lors d'un actionnement manuel, et un deuxième circuit de frein (16) du frein de service étant formé par un frein actionné par une force extérieure, qui présente une soupape de régulation de pression (25), au moyen de laquelle la pression de desserrage de frein existant dans l'espace de pression de desserrage de frein (12) peut être réduite de manière mesurée, la soupape de régulation de pression (25) étant réalisée sous forme de soupape de régulation de pression proportionnelle, la soupape de régulation de pression (25) étant raccordée à une conduite d'alimentation en pression (26) d'un dispositif d'alimentation en pression (27), à une conduite sous pression de desserrage de frein (28) guidée jusqu'à l'espace de pression de desserrage de frein (12) du frein à accumulateur à ressort (7) et à un récipient (29) et la soupape de régulation de pression (25) étant sollicitée par un dispositif d'actionnement (31) en direction d'une position de freinage reliant la conduite sous pression de desserrage de frein (28) au récipient (29) et étant sollicitée en direction d'une position de desserrage reliant la conduite sous pression de desserrage de frein (28) à la conduite d'alimentation en pression (26) au moyen d'une conduite de commande (30), qui est en liaison avec la conduite sous pression de desserrage de frein (28), par la pression de desserrage de frein existant dans la conduite sous pression de desserrage de frein (28) à l'encontre du dispositif d'actionnement (31).

2. Machine de travail mobile selon la revendication 1, **caractérisée en ce que** le cylindre de frein (21) du premier circuit de frein (15) est actionné par une pédale de frein (17) et est en liaison avec l'espace de pression de freinage (13) du frein à accumulateur à ressort (7) au moyen d'une conduite sous pression de freinage (22), le premier circuit de frein (15) présentant un récipient de compensation (23).

3. Machine de travail mobile selon la revendication 1 ou 2, **caractérisée en ce que** la soupape de régulation de pression (25) est réalisée sous forme de soupape de régulation de pression proportionnelle présentant une courbe caractéristique de soupape décroissante.

4. Machine de travail mobile selon l'une des revendications 1 à 3, **caractérisée en ce que** la soupape de régulation de pression (25) peut être actionnée manuellement.

5. Machine de travail mobile selon la revendication 4, **caractérisée en ce que** le frein à accumulateur à ressort (7) est réalisé sous forme de frein de stationnement, la soupape de régulation de pression (25) pouvant être actionnée manuellement étant dotée d'un dispositif de verrouillage (65) au moyen duquel la soupape de régulation de pression (25) peut être verrouillée dans un état actionné dans lequel la pression de desserrage de frein est diminuée.

6. Machine de travail mobile selon l'une des revendications 1 à 3, **caractérisée en ce que** la soupape de régulation de pression (25) peut être actionnée électriquement.

7. Machine de travail mobile selon l'une des revendications 1 à 6, **caractérisée en ce que** la soupape de régulation de pression (25) peut être actionnée en fonction d'un élément de commande (41).

8. Machine de travail mobile selon la revendication 6 ou 7, **caractérisée en ce que** la soupape de régulation de pression (25) peut être actionnée de manière automatisée par un dispositif de commande électronique (40).

9. Machine de travail mobile selon l'une des revendications 1 à 8, **caractérisée en ce que** l'espace de pression de desserrage de frein (12) est raccordé à une soupape de limitation de pression (35).

10. Machine de travail mobile selon la revendication 9, **caractérisée en ce que** la pression d'ouverture de la soupape de limitation de pression (35) est réglée de telle sorte que la pression d'ouverture est supérieure à la pression de desserrage de frein pouvant être réglée au maximum au moyen de la soupape de régulation de pression (25).

11. Machine de travail mobile selon l'une des revendications 1 à 4 ou 6 à 10, **caractérisée en ce que** le frein à accumulateur à ressort (7) est réalisé sous forme de frein de stationnement, une soupape de désaccouplement (45) pouvant être actionnée électriquement étant disposée dans la conduite d'alimentation en pression (26) guidée jusqu'à la soupape de régulation de pression (25) et une soupape de commutation (46) pouvant être actionnée électriquement étant prévue, laquelle est associée à l'espace de pression de desserrage de frein (12), la soupape de commutation (46) présentant une position de blocage (46a) active dans l'état sans courant et une position sans pression (46b) pouvant être commutée électriquement et reliant l'espace de pression de desserrage de frein (12) à un récipient (29), la soupape de commutation (46) étant alimentée en courant électrique dans la position sans pression (46b) et la soupape de régulation de pression (25) étant désaccouplée au moyen de la soupape de désaccouplement (45) pour l'obtention du frein de stationnement.

12. Machine de travail mobile selon l'une des revendications 1 à 10, **caractérisée en ce que** le frein à accumulateur à ressort (7) est réalisé sous forme de frein de stationnement, une soupape de désaccouplement (45) pouvant être actionnée électriquement étant disposée dans la conduite d'alimentation en pression (26) guidée jusqu'à la soupape de régulation de pression (25), la soupape de régulation de pression (25) étant désaccouplée au moyen de la soupape de désaccouplement (45) et l'espace de pression de desserrage de frein (12) étant déchargé par rapport au récipient (29) par actionnement de la soupape de régulation de pression (25) pour l'obtention du frein de stationnement.

13. Machine de travail mobile selon la revendication 11 ou 12, **caractérisée en ce que** la soupape de désaccouplement (45) est réalisée sous forme de soupape de commutation, qui présente une position de blocage (45a) active dans l'état sans courant et une position d'écoulement (45b) pouvant être commutée électriquement.

14. Machine de travail mobile selon l'une des revendications 1 à 13, **caractérisée en ce que** le frein à accumulateur à ressort (7) permet, dans l'état sans courant, un freinage de secours de la machine de travail avec un couple de freinage réduit, une autre soupape de commutation (55) pouvant être actionnée électriquement étant prévue, laquelle est associée à l'espace de pression de desserrage de frein (12), l'autre soupape de commutation (55) présentant une position d'écoulement (55b) active dans l'état sans courant, dans laquelle l'espace de pression de desserrage de frein (12) est en liaison avec un récipient (29) par le biais d'un dispositif de diminution de pression (59), et une position de blocage (55a) pouvant être commutée électriquement, et l'autre soupape de commutation (55) n'étant pas alimentée en courant électrique pour l'obtention du freinage de secours.

15. Machine de travail mobile selon la revendication 14, **caractérisée en ce que** l'autre soupape de commutation (55) est pourvue d'un dispositif d'actionnement (62) manuel, au moyen duquel l'autre soupape de commutation (55) peut être actionnée dans la position de blocage (55a), ou le dispositif de diminution de pression (59) peut être réglé manuellement dans la pression de réglage, et une pompe manuelle (61) est prévue, au moyen de laquelle une pression de desserrage de frein peut être produite dans l'espace de pression de desserrage de frein (12) .

16. Machine de travail mobile selon l'une des revendications 1 à 15, **caractérisée en ce que** le dispositif de freinage (6) présente une construction modulaire, au moins deux dispositifs de soupape de commande différents étant prévus, une première forme de réalisation du dispositif de soupape de commande comportant la soupape de régulation de pression (25) et la soupape de limitation de pression (35), et une deuxième forme de réalisation du dispositif de soupape de commande comportant la soupape de régulation de pression (25), la soupape de limitation de pression (35) et au moins l'un des composants suivants :
• la soupape de commutation (46) et la soupape de désaccouplement (45),
• l'autre soupape de commutation (55) et la soupape de diminution de pression (59),
• la pompe manuelle (61).

17. Machine de travail mobile selon l'une des revendications 1 à 16, **caractérisée en ce que** le frein à accumulateur à ressort (7) présente un dispositif de piston de frein (11) pour l'actionnement entre la position de freinage et la position de desserrage, le dispositif de piston de frein (11) présentant un piston de frein, au niveau duquel l'espace de pression de freinage (13) et l'espace de pression de desserrage de frein (12) sont réalisés, ou le dispositif de piston de frein (11) présentant un premier piston de frein, au niveau duquel l'espace de pression de freinage (13) est réalisé, et présentant un deuxième piston de frein, au niveau duquel l'espace de pression de desserrage de frein (12) est réalisé.

18. Machine de travail mobile selon l'une des revendications 1 à 17, **caractérisée en ce qu'**un capteur de pression (66) est prévu, lequel détecte la pression de desserrage de frein existant dans l'espace de pression de desserrage de frein (12).

19. Machine de travail mobile selon l'une des revendications 1 à 18, **caractérisée en ce que** la machine de travail (1) présente un système de propulsion électrique à batterie, un système de propulsion électrique à moteur à combustion interne ou un système de propulsion hydrodynamique à moteur à combustion interne.
